# EUROPÄISCHE PATENTSCHRIFT

(11) **EP 3 392 010 B1**
(45) Veröffentlichungstag und Bekanntmachung des Hinweises auf die Patenterteilung: **28.08.2019**
(21) Anmeldenummer: 18159261.9
(22) Anmeldetag: 28.02.2018
(51) Int. Cl.: B28D 1/00, E21C 37/04

(54) **HYDRAULISCH BETRIEBENES SPALTGERÄT**
HYDRAULICALLY OPERATED SPLITTING DEVICE
APPAREIL DE FENDAGE HYDRAULIQUE

(30) Priorität: 18.04.2017 DE 102017108238
(43) Veröffentlichungstag der Anmeldung: 24.10.2018
(73) Patentinhaber: Darda GmbH, 78176 Blumberg (DE)
(72) Erfinder: Darda, Burkhard, 78166 Donaueschingen (DE); Scherzinger, Michael, 78052 Villingen-Schwenningen (DE)
(74) Vertreter: Westphal, Mussgnug & Partner Patentanwälte mbB

(56) Entgegenhaltungen:
- SU-A1- 1 093 809
- SU-A1- 1 126 694
- SU-A1- 1 265 325
- SU-A1- 1 266 984
- US-A- 3 743 357

## Beschreibung

Die vorliegende Erfindung betrifft ein hydraulisch betriebenes Spaltgerät nach dem Oberbegriff des Anspruchs 1. Ein solches Spaltgerät ist der US3743357 zu entnehmen.

Hydraulisch betriebene Spaltgeräte mit einer Kolben-Zylinder-Einheit mit einer Ausfahrkammer und einer Einfahrkammer, in welcher ein Kolben in eine Ausfahrrichtung und eine Einfahrrichtung verschiebbar gelagert ist und die Ausfahrkammer und die Einfahrkammer zum Verschieben des Kolbens mit einer Verschiebegeschwindigkeit mit einem unter Druck stehenden Hydraulikmedium beaufschlagbar sind, sind aus dem Stand der Technik bekannt. In einem Zylindergehäuse sind üblicherweise zwei langgestreckte Druckstücke senkrecht zur Ausfahrrichtung und zur Einfahrrichtung verschiebbar gelagert. Eine mit einer Kolbenstange des Kolbens verbundene und mit dem Kolben bewegbare Keillanze greift in zwei zur Keillanze komplementär keilförmigen Druckflächen der Druckstücke ein und verschiebt die Druckstücke in Abhängigkeit von der Position des Kolbens in der Kolben-Zylinder-Einheit senkrecht zur Verschieberichtung des Kolbens.

Solche hydraulisch betriebenen Spaltgeräte werden beispielsweise für das Spalten von Beton, Gestein und dergleichen spröd-harten Materialien in Steinbrüchen aber auch bei Abbrucharbeiten eingesetzt. Ein verbreitetes Einsatzgebiet ist der Abbau von Gestein in Steinbrüchen, wobei mittels der Spaltgeräte großformatige Steinblöcke aus einem massiven Felsen abgespalten werden. Beim Einsatz der aus dem Stand der Technik bekannten Geräte wird dabei so verfahren, dass Bohrlöcher mit einem Durchmesser in die Steinblöcke eingebracht werden, der gerade so gewählt ist, dass die langgestreckten Druckstücke bei eingefahrener Keillanze in die Bohrlöcher eingebracht werden können. Wenn die Druckstücke des Spaltgerätes in diese Bohrlöcher eingebracht und die Keillanze dann durch hydraulische Beaufschlagung der Kolben-Zylinder-Einheit ausgefahren wird, werden die Druckstücke auseinander gedrängt und sprengen durch den dabei auf die Bohrungswandung ausgeübten Druck den Felsen. Zur Veränderung eines Hub-Kraftverhältnisses beim Auseinanderdrängen der Druckstücke sind Keillanzen und Druckstücke mit unterschiedlichen Steigungen bekannt. Es ist außerdem bekannt, zur Verwendung von Spaltgeräten in bereits aufgeweiteten Bohrlöchern sogenannte Erweiterungsstücke, das sind Druckstücke mit in einer Richtung vergrößertem Durchmesser, zu verwenden.

Die aus dem Stand der Technik bekannten hydraulisch betriebenen Spaltgeräte werden üblicherweise mit einer als Hydraulikpumpe ausgebildeten Fördervorrichtung betrieben, welche das Hydraulikmedium mit einem Druck beaufschlagt. Mit diesem Druck wird die Kolben-Zylinder-Einheit sowohl in Ausfahrrichtung als auch in Einfahrrichtung beaufschlagt.

Zwischen der Keillanze und den Druckstücken wirkt eine hohe Reibung, die zu einem hohen Verschleiß der Druckstücke und der Keillanze führt, so dass diese nach relativ wenigen Betriebsstunden ausgetauscht werden müssen. Die Anzahl der Betriebsstunden, nach der die Druckstücke oder die Lanzen ausgetauscht werden müssen, lässt sich durch das Einbringen eines Schmiermittels zwischen die Keillanze und die Druckstücke deutlich erhöhen. Es ist daher bekannt, Spaltgeräte mit einer Schmiereinrichtung zu versehen, mit welcher das Schmiermittel von einem Schmiermittelvorratsbehälter zwischen die Keillanze und die Druckstücke einbringbar ist. Bei einigen Spaltgeräten muss der Bediener die Schmiereinrichtung händisch aktivieren, so dass die Gefahr besteht, dass bei einer unterlassenen Aktivierung der Verschleiß nur bedingt verringert und die Betriebsstunden nicht im maximal möglichen Umfang erhöht werden können.

Bei anderen Spaltgeräten wird das Schmiermittel automatisch im Betrieb zwischen die Keillanze und die Druckstücke eingebracht, so dass die Schmierung nicht vom Bediener veranlasst werden muss.

In beiden Fällen kann nicht festgestellt werden, ob noch ausreichend Schmiermittel im Schmiermittelvorratsbehälter vorhanden ist. Die Spaltgeräte werden weiterbetrieben, ohne dass der Bediener davon Kenntnis erlangt, dass kein Schmiermittel mehr vorhanden ist, so dass dann der Verschleiß nicht verringert und die Betriebsstunden nicht im maximal möglichen Umfang erhöht werden können.

Aufgabe der vorliegenden Erfindung ist es daher, ein Spaltgerät bereitzustellen, mit welchem diesen Nachteilen begegnet wird. Insbesondere soll ein Spaltgerät bereitgestellt werden, mit welchem der Verschleiß sicher verringert und die Anzahl der Betriebsstunden, nach der die Keillanze und die Druckstücke ausgetauscht werden müssen, erhöht werden können.

Diese Aufgabe wird mit den in Anspruch 1 angegebenen Merkmalen gelöst. Vorteilhafte Ausführungsformen sind Gegenstand der Unteransprüche.

Eine Ausführungsform der Erfindung betrifft ein hydraulisch betriebenes Spaltgerät mit einer Kolben-Zylinder-Einheit mit einer Ausfahrkammer und einer Einfahrkammer, in welcher ein Kolben in eine Ausfahrrichtung und eine Einfahrrichtung verschiebbar gelagert ist, wobei die Ausfahrkammer und die Einfahrkammer zum Verschieben des Kolbens mit einer Verschiebegeschwindigkeit mit einem unter Druck stehenden Hydraulikmedium beaufschlagbar sind, einem Zylindergehäuse, an welchem eine Anzahl von Druckstücken senkrecht zur Ausfahrrichtung und zur Einfahrrichtung verschiebbar gelagert ist, und einer mit einer Kolbenstange des Kolbens verbundene und mit dem Kolben bewegbare Keillanze, die in zur Keillanze komplementär keilförmigen Druckflächen der Druckstücke eingreift und die Druckstücke in Abhängigkeit von der Position des Kolbens in der Kolben-Zylinder-Einheit senkrecht zur Ausfahrrichtung und zur Einfahrrichtung verschiebt. Weiterhin weist das Spaltgerät eine Schmiereinrichtung, mit welcher ein Schmiermittel von einem Schmiermittelvorratsbehälter zwischen die Keillanze und die Druckstücke einbringbar ist, und eine Schutzeinrichtung auf, mit der die Verschiebegeschwindigkeit in Abhängigkeit vom Füllstand des Schmiermittels im Schmiermittelvorratsbehälter reduzierbar ist.

Die Schutzeinrichtung kann dabei so ausgestaltet sein, dass die Verschiebegeschwindigkeit abhängig vom Füllstand reduziert oder ganz oder nahezu auf null verringert wird. Beim Bewegen der Keillanze entlang der Druckflächen liegt eine Gleitreibung vor, welche mit zunehmender Geschwindigkeit steigt. Folglich führt eine Reduzierung der Verschiebegeschwindigkeit zu einer Reduzierung des Verschleißes und zu einer Erhöhung der Anzahl der Betriebsstunden, nach der die Keillanze und die Druckstücke ausgetauscht werden müssen. Die Schutzeinrichtung kann dabei so ausgestaltet werden, dass die Reduzierung der Verschiebegeschwindigkeit erst dann eintritt, wenn der Füllstand unterhalb eines bestimmten Wertes gefallen ist, beispielsweise dann, wenn das Volumen des Schmiermittels im Schmiermittelvorratsbehälter weniger als 15 bis 20% des Maximalvolumens beträgt. Weiterhin kann die Schutzeinrichtung so ausgestaltet sein, dass die Verschiebegeschwindigkeit auf null verringert wird, wenn kein Schmiermittel mehr im Schmiermittelvorratsbehälter vorhanden ist. Die Verringerung der Verschiebegeschwindigkeit auf null ist aber als ein theoretischer Fall zu betrachten, da bei den hohen Drücken, die bis zu 500 bar betragen können, immer eine gewisse Leckage vorliegt, so dass der Kolben und folglich die Keillanze immer noch bewegt werden, allerdings mit einer sehr geringen Geschwindigkeit.

Die Reduzierung der Verschiebegeschwindigkeit ist für den Benutzer ein leicht erkennbares Signal, dass das Schmiermittel zur Neige geht und neues Schmiermittel nachgefüllt werden sollte. Der weitere Betrieb des Spaltgeräts ist noch möglich, wenn auch mit verringerter Effektivität. Es bleibt aber genügend Zeit, das Nachfüllen des Schmiermittels vorzubereiten, so dass der Stillstand des Spaltgeräts gering gehalten werden kann.

Die Reduzierung der Verschiebegeschwindigkeit auf null verhindert den weiteren Betrieb des Spaltgeräts, wodurch ein Trockenlaufen und die damit verbundene Erhöhung des Verschleißes ebenfalls verhindert werden. Die Lebensdauer des Spaltgeräts wird mit der vorschlagsgemäßen Schutzeinrichtung deutlich erhöht.

Nach Maßgabe einer weiteren Ausführungsform ist die Schutzeinrichtung derart ausgebildet, dass nur die Verschiebegeschwindigkeit beim Ausfahren des Kolbens reduzierbar ist. Wie eingangs erwähnt, werden beispielsweise Felsen dadurch in großformatige Steinblöcke gespalten, dass die Druckstücke durch Ausfahren der Keillanze radial nach außen gedrückt werden, wobei die Keillanze vom Kolben bewegt wird. Die beim Ausfahren zwischen der Keillanze und den Druckstücken wirkenden Kräfte und somit die Reibung sind deutlich höher als beim Einfahren, so dass ein Weiterbetrieb ohne Schmierung beim Einfahren zu einer deutlich verringerten Verschleißerhöhung führt als beim Ausfahren. Insofern kann ein Weiterbetrieb ohne Schmierung beim Einfahren in bestimmten Grenzen akzeptiert werden. Es wird sichergestellt, dass das Spaltgerät in jedem Fall aus den Bohrlöchern entfernt werden kann.

In einer weitergebildeten Ausführungsform kann das Spaltgerät ein Leitungssystem, in welchem das Hydraulikmedium in die Ausfahrkammer und die Einfahrkammer förderbar ist und die Schutzeinrichtung eine im Leitungssystem angeordnete Drossel umfassen, mit welcher der Volumenstrom des Hydraulikmediums in Abhängigkeit des Füllstands des Schmiermittels im Schmiermittelvorratsbehälter reduzierbar ist. Der Volumenstrom, mit welchem die Ausfahrkammer und die Einfahrkammer mit dem Hydraulikmedium befüllt werden, bestimmt die Verschiebegeschwindigkeit des Kolbens und folglich der Keillanze. Die Verwendung der Drossel ermöglicht auf einfache Weise, den Volumenstrom des Hydraulikmediums im Leitungssystem und damit die Verschiebegeschwindigkeit zu verringern. Um den Volumenstrom des Hydraulikmediums stromabwärts der Drossel zu reduzieren, reduziert die Drossel den Strömungsquerschnitt.

Bei einer weitergebildeten Ausführungsform kann die Drossel einen in das Leitungssystem einbringbaren Schieber umfassen, der mit einem im Schmiermittelvorratsbehälter bewegbaren und druck- oder federbelasteten Förderkolben betätigbar ist. Der Förderkolben sorgt für eine Förderung des Schmiermittels zur Keillanze und zu den Druckstücken, indem der Förderkolben das Schmiermittel aus dem Schmiermittelvorratsbehälter herauspresst. Dadurch, dass der Förderkolben druck- oder federbelastet ist, kann die Förderung unabhängig oder weitgehend unabhängig vom Füllstand des Schmiermittels im Schmiermittelvorratsbehälter ausgeführt werden. Der Förderkolben folgt der freien Oberfläche des Schmiermittels, so dass seine Stellung den Füllstand und folglich das verbleibende Volumen des Schmiermittels im Schmiermittelvorratsbehälter anzeigt. Der Schieber kann in den Schmiermittelvorratsbehälter hineinragen und tritt dann ab einem bestimmten Füllstand mit dem Förderkolben in Kontakt. Der Förderkolben verschiebt dann den Schieber in das Leitungssystem, wodurch eine Querschnittsverengung und folglich eine Reduzierung des Volumenstroms des Hydraulikmediums stromabwärts des Schiebers im Leitungssystem erzeugt wird. Diese Ausführungsform lässt sich besonders einfach und kompakt umsetzen.

Gemäß einer fortgebildeten Ausführungsform unterteilt der Förderkolben den Schmiermittelvorratsbehälter in eine Schmiermittelkammer und eine Druckkammer, wobei die Druckkammer mit dem Leitungssystem verbunden ist. In diesem Fall übernimmt der Druck des Hydraulikmediums den Vorschub des Förderkolbens, so dass keine zusätzlichen Maßnahmen zum Belasten des Förderkolbens getroffen werden müssen.

Bei einer weiteren Ausführungsform kann der Schieber federbelastet sein. Mit der Federkennlinie der Feder, mit welcher der Schieber federbelastet wird, kann die Art und Weise, wie der Volumenstrom des Hydraulikmediums und folglich die Verschiebegeschwindigkeit reduziert werden, auf einfache Weise beeinflusst werden. Zudem wird der Schieber wieder in die Ausgangsstellung zurückgestellt, wenn der Schmiermittelvorratsbehälter wieder aufgefüllt wird.

Eine weitergebildete Ausführungsform zeichnet sich dadurch aus, dass die Schmiereinrichtung eine mit dem Schmiermittelvorratsbehälter verbundene Dosiereinrichtung zum Dosieren der Menge des zwischen die Keillanze und die Drückstücke geförderten Schmiermittels aufweist, wobei die Dosiereinrichtung so ausgebildet ist, dass sie nur beim Ausfahren oder nur beim Einfahren des Kolbens das Schmiermittel zwischen die Keillanze und die Drückstücke fördert. Mit der Dosiereinrichtung kann die Menge des Schmiermittels bestimmt werden, welche zwischen die Keillanze und die Drückstücke gefördert werden soll. Je nach Anwendung und verwendeten Druckstücken kann hier die optimale Menge gewählt werden, so dass weder eine Über- noch eine Unterdosierung vorgenommen wird. Dadurch, dass nur beim Ausfahren oder nur beim Einfahren des Kolbens das Schmiermittel zwischen die Keillanze und die Drückstücke gefördert wird, wird ein effektiver Einsatz des Schmiermittels ermöglicht.

Nach Maßgabe einer weiteren Ausführungsform umfasst die Schmiereinrichtung ein Befüllungsventil, welches zum Befüllen des Schmiermittelvorratsbehälters in eine Befüllungsstellung stellbar ist, in welcher Schmiermittel in den Schmiermittelvorratsbehälter einbringbar ist. Das Spaltgerät weist typischerweise einen Einfüllstutzen auf, über den das Schmiermittel nachgefüllt werden kann. In einer Betriebsstellung verschließt das Befüllungsventil den Einfüllstutzen oder einen zum Einfüllstutzen führenden Leitungsabschnitt, so dass das Schmiermittel nicht über den Einfüllstutzen austreten kann. Soll Schmiermittel nachgefüllt werden, wird das Befüllungsventil in die Befüllungsstellung gestellt, wodurch der Zugang zum Schmiermittelvorratsbehälter freigegeben wird.

Eine weitere Ausführungsform zeichnet sich dadurch aus, dass das Leitungssystem mit einer Fördervorrichtung zum Fördern des Hydraulikmediums im Leitungssystem verbindbar ist und das Befüllungsventil in der Befüllungsstellung zumindest einen Teil des Leitungssystems von der Fördervorrichtung trennt. Das Spaltgerät muss nicht zwangsläufig eine eigene Fördervorrichtung aufweisen, mit welchem das Hydraulikmedium mit Druck beaufschlagt werden kann. Das Spaltgerät kann beispielsweise an einen Bagger angeschlossen werden, welcher über eine derartige Fördervorrichtung, insbesondere eine Hydraulikpumpe, verfügt. Das Trennen des Leitungssystems von der Fördervorrichtung ermöglicht das Nachfüllen des Schmiermittels, ohne dass die Fördervorrichtung mit dem Spaltgerät verbunden sein muss. Hierdurch kann die Handhabung vereinfacht werden, da das Schmiermittel an einem vom Bagger entfernten Ort nachgefüllt werden kann. Die Hydraulikleitungen stören den Befüllvorgang nicht.

In einer weitergebildeten Ausführungsform schließt das Befüllungsventil in der Befüllungsstellung den Schmiermittelvorratsbehälter ausgangsseitig. Hierdurch ist gewährleistet, dass das Schmiermittel in den Schmiermittelvorratsbehälter eingefüllt werden kann, das Schmiermittel den Schmiermittelvorratsbehälter aber nicht unkontrolliert verlassen kann. Insbesondere dann, wenn das Schmiermittel eine sehr geringe Viskosität aufweist, wird verhindert, dass das Schmiermittel beim Nachfüllen zwischen die Keillanze und die Druckstücke fließt.

Beispielhafte Ausführungsformen der Erfindung werden im Folgenden unter Bezugnahme auf die beigefügten Zeichnungen näher erläutert. Es zeigen
- Figur 1: eine schematische Darstellung eines erfindungsgemäßen Spaltgeräts,
- Figur 2: ein hydraulischer Schaltplan des erfindungsgemäßen Spaltgeräts, und
- Figuren 3a) bis 3d): ein Ausführungsbeispiel einer erfindungsgemäßen Schutzeinrichtung in verschiedenen Betriebszuständen.

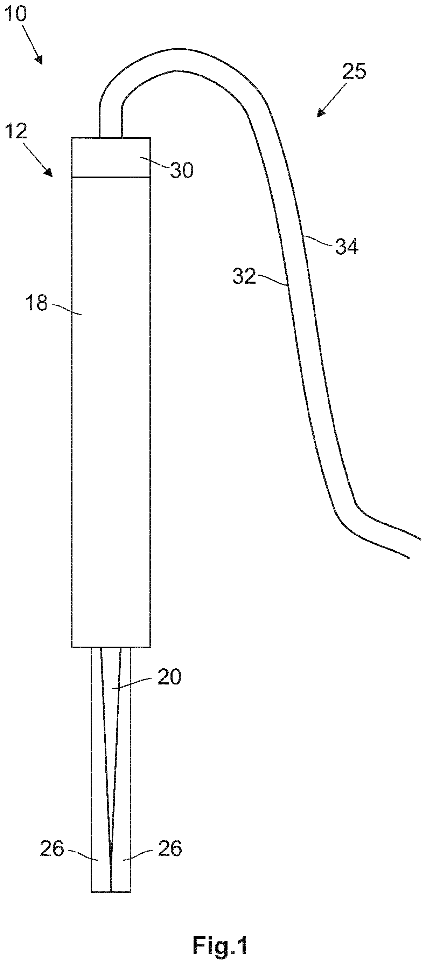

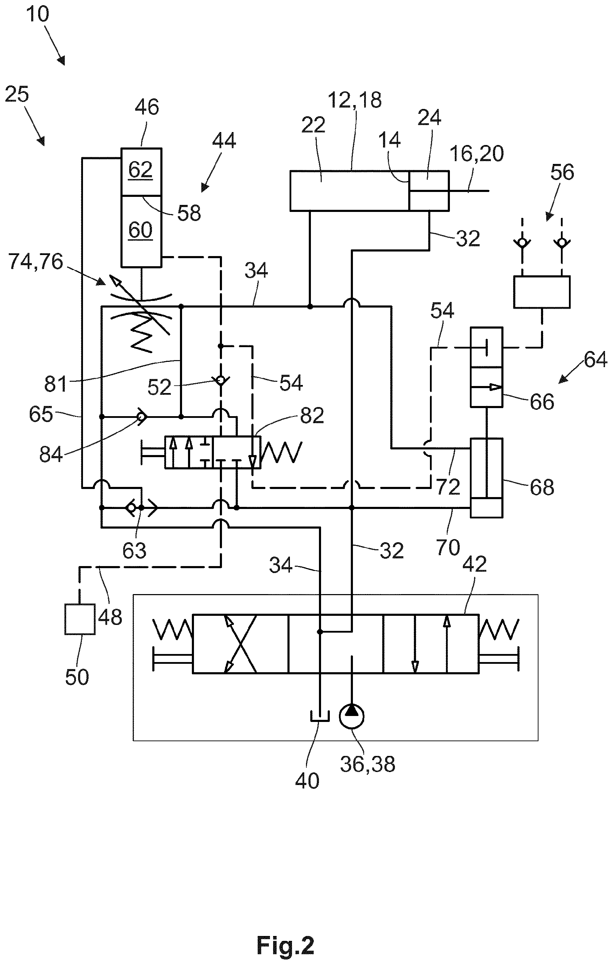

Figur 1 zeigt eine schematische Darstellung eines hydraulisch betriebenen Spaltgeräts 10 einer Kolben-Zylinder-Einheit 12 mit einem langgestreckten Zylindergehäuse 18, in welchem ein Kolben 14 mit einer Kolbenstange 16 in eine Ausfahrrichtung und eine Einfahrrichtung verschiebbar gelagert ist (siehe Figur 2). An der Kolbenstange 16 ist eine Keillanze 20 befestigt. Der Kolben 14 unterteilt einen Innenraum des Zylindergehäuses 18 in eine Ausfahrkammer 22 sowie eine Einfahrkammer 24, die über ein Leitungssystem 25 mit Hydraulikmedium beaufschlagbar sind. Bei Beaufschlagung der Ausfahrkammer 22 wird der Kolben 14 mit einer Verschiebegeschwindigkeit in eine Ausfahrrichtung und bei Beaufschlagung der Einfahrkammer 24 mit einer Verschiebegeschwindigkeit in eine entgegengesetzte Einfahrrichtung verschoben. Die Keillanze 20 folgt der Bewegung des Kolbens 14.

Die Keillanze 20 ist zwischen zwei in Ein- und Ausfahrrichtung unverschiebbaren, quer dazu jedoch verschiebbaren mit dem Zylindergehäuse 18 verbundenen langgestreckten Druckstücken 26 angeordnet. Bei einem Aus- bzw. Einfahren der Keillanze 20 werden die Druckstücke 26 entsprechend der Bewegungsrichtung der Keillanze 20 bzw. der dazu korrespondierenden Bewegungsrichtung des Kolbens 14 auseinandergedrängt (ausfahren) bzw. können in Richtung der Längsachse der Keillanze 20 zurückweichen (einfahren).

Das Spaltgerät 10 weist ein Gehäuse 30 auf, welches am Zylindergehäuse 18 befestigt ist und in welchem zumindest einige der in Figur 2 dargestellten Komponenten des Leitungssystems 25 angeordnet sind.

Das Leitungssystem 25 weist eine Druckleitung 32 und eine Tankleitung 34 auf. Ein Hydraulikmedium wird in einem Tank 40 bevorratet. Die Fördervorrichtung 36 ist in diesem Fall als eine Hydraulikpumpe 38 ausgebildet, mit welcher das Hydraulikmedium mit Druck beaufschlagt werden kann.

Die Druckleitung 32 und die Tankleitung 34 sind mit einem 4/3-Schaltventil 42 verbunden. In einer ersten Schaltstellung des Schaltventils sind die Fördervorrichtung 36 mit der Druckleitung 32 und der Tank 40 mit der Tankleitung 34 verbunden, wobei in einer zweiten Schaltstellung des 4/3-Schaltventils 42 die Fördervorrichtung 36 mit der Tankleitung 34 und der Tank 40 mit der Druckleitung 32 verbunden sind. Folglich kann das mit Druck von der Fördervorrichtung 36 gefördertes Hydraulikmedium sowohl an der Druckleitung 32 als auch an der Tankleitung 34 anliegen. Die gewählten Bezeichnungen dienen lediglich zur Unterscheidung der einzelnen Leitungen.

In der ersten Schaltstellung des 4/3-Schaltventils 42 wird die Einfahrkammer 24 mit dem Hydraulikmedium beaufschlagt, wodurch der Kolben 14 und folglich die Keillanze 20 in die Einfahrrichtung verschoben wird. In der zweiten Schaltstellung wird die Ausfahrkammer 22 mit dem Hydraulikmedium beaufschlagt, so dass der Kolben 14 und folglich die Keillanze 20 in die Ausfahrrichtung verschoben wird.

In einer Ruhestellung, die wie dargestellt zwischen der ersten und der zweiten Schaltstellung des 4/3-Schaltventils 42 angeordnet und federbetätigt eingenommen wird, sind sowohl die Druckleitung 32 als auch die Tankleitung 34 mit dem Tank 40 verbunden, so dass sowohl die Druckleitung 32 als auch die Tankleitung 34 in diese Ruhestellung drucklos geschaltet sind.

Anzumerken ist, dass der Tank 40, die Fördervorrichtung 36 und das 4/3-Schaltventil 42 nicht am Spaltgerät 10 angeordnet sein müssen, sondern in einer externen Einheit, beispielsweise in einem nicht dargestellten Bagger, untergebracht sein können, so dass das Spaltgerät 10 maschinengeführt ausgestaltet ist. Die integrierte Anordnung im Spaltgerät 10 ist aber ebenfalls möglich, so dass das Spaltgerät 10 auch handgeführt ausgestaltet werden kann.

Weiterhin weist das Spaltgerät 10 eine Schmiereinrichtung 44 auf, mit welcher ein Schmiermittel von einem Schmiermittelvorratsbehälter 46 zwischen die Keillanze 20 und die Druckstücke 26 einbringbar ist. Die Schmiereinrichtung 44 weist eine Einfüllleitung 48 auf, die mit einem Einfüllstutzen 50 verbunden ist. Über den Einfüllstutzen 50 und die Einfüllleitung 48 kann das Schmiermittel in den Schmiermittelvorratsbehälter 46 eingefüllt werden. In der Einfüllleitung 48 ist ein Rückschlagventil 52 vorgesehen. In Einfüllrichtung gesehen stromabwärts vom Rückschlagventil 52 zweigt eine Abführleitung 54 von der Einfüllleitung 48 ab, die zu einem Verteiler 56 führt, über den das Schmiermittel zwischen der Keillanze 20 und den beiden Druckstücke 26 abgegeben wird.

Im Schmiermittelvorratsbehälter 46 ist ein Förderkolben 58 verschiebbar angeordnet. Der Förderkolben 58 unterteilt den Schmiermittelvorratsbehälter 46 in eine Schmiermittelkammer 60, in welcher das Schmiermittel aufgenommen wird, und eine Druckkammer 62. Das Leitungssystem umfasst ein Wechselventil 63, welches sowohl mit der Druckleitung 32 als auch mit der Tankleitung 34 verbunden ist. Vom Wechselventil 63 führt eine Verbindungsleitung 65 in die Druckkammer 62. Befindet sich das 4/3-Schaltventil 42 in der ersten oder der zweiten Schaltstellung, wird die Druckkammer 62 mit dem Hydraulikmedium beaufschlagt und verschiebt den Förderkolben 58 entsprechend im Schmiermittelvorratsbehälter 46, wodurch das Schmiermittel aus der Schmiermittelkammer 60 herausgepresst und zum Verteiler 56 gefördert wird.

Der Schmiermittelvorratsbehälter 46 kann auch als austauschbare Schmiermittelkartusche ausgeführt sein. Die oben beschriebenen Funktionen bleiben hierdurch unverändert.

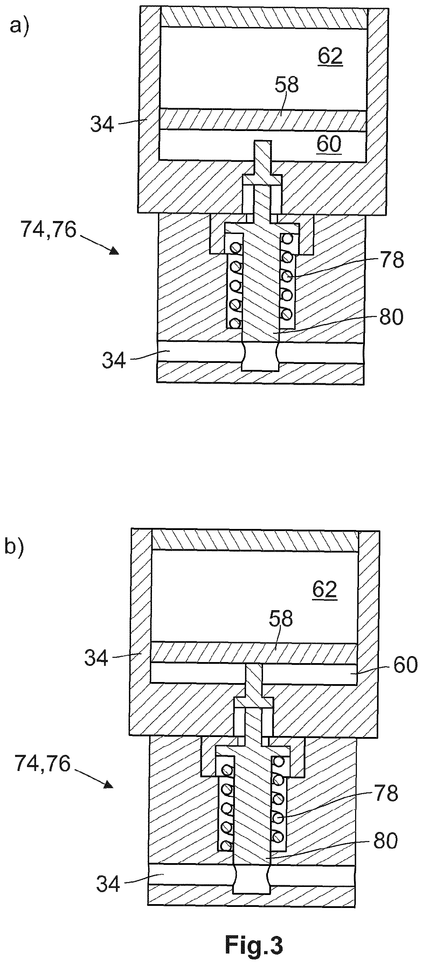

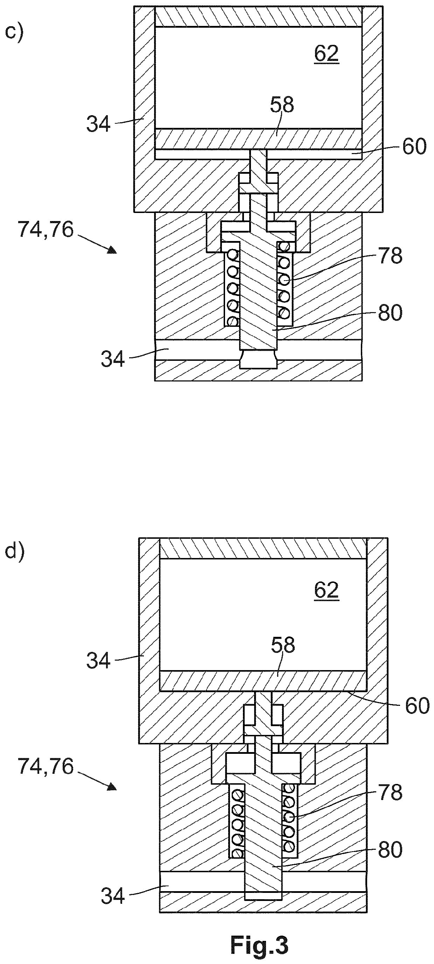

Zwischen dem Schmiermittelvorratsbehälter 46 und dem Verteiler 56 ist eine vereinfacht dargestellte Dosiereinrichtung 64 angeordnet, mit welcher die Menge des vom Verteiler 56 abgegebenen Schmiermittels eingestellt werden kann. Die Dosiereinrichtung 64 umfasst ein 2/2-Schaltventil 66, welches in einer ersten Schaltstellung die Verbindung zwischen dem Schmiermittelvorratsbehälter 46 und dem Verteiler 56 freigibt und in einer zweiten Schaltstellung die Verbindung, wie dargestellt, trennt. Das 2/2-Schaltventil 66 ist mit einem Schaltkolben 68 verbunden, der über eine erste Zuführleitung 70 und eine zweite Zuführleitung 72 mit dem Leitungssystem 25 verbunden ist und mit dem Hydraulikmedium beaufschlagt und in die erste oder die zweite Schaltstellung gestellt werden kann. Im dargestellten Ausführungsbeispiel ist das 2/2-Schaltventil 66 so in das Leitungssystem 25 eingebunden, dass die Verbindung zwischen dem Schmiermittelvorratsbehälter 46 und dem Verteiler 56 nur dann freigegeben wird, wenn der Kolben 14 und folglich die Keillanze 20 in die Einfahrrichtung bewegt werden. Nur dann wird das Schmiermittel über den Verteiler 56 ausgebracht. Darüber hinaus weist das Spaltgerät 10 eine Schutzeinrichtung 74 auf, welche als Drossel 76 ausgeführt ist und in diesem Fall den Strömungsquerschnitt der Tankleitung 34 reduzieren kann. Wie insbesondere aus den Figuren 3a) bis 3d) hervorgeht, in denen die in die Druckkammer 62 Verbindungsleitung 65 und die in die Schmiermittelkammer 60 mündende Einfüllleitung 48 nicht dargestellt sind, weist die Drossel 76 einen mit einer Feder 78 in eine Offenstellung vorgespannten Schieber 80 auf, der in die Tankleitung 34 einbringbar ist. Der Schieber 80 ragt um ein bestimmtes Maß in die Schmiermittelkammer 60 hinein. Mit abnehmendem Füllstand des Schmiermittels in der Schmiermittelkammer 60 wird der Förderkolben 58 zum Schieber 80 hin verschoben. Ab einem gewissen Füllstand tritt der Förderkolben 58 mit dem Schieber 80 in Kontakt (siehe Figur 3b)). Nimmt der Füllstand weiter ab, so ragt der Schieber 80 in die Tankleitung 34 hinein und verringert den für das Hydraulikmedium zur Verfügung stehenden Strömungsquerschnitt, wodurch der Volumenstrom des Hydraulikmediums stromabwärts des Schiebers 80 gemindert wird (siehe Figur 3c)). Die Minderung des Volumenstroms des Hydraulikmediums führt dazu, dass die Verschiebegeschwindigkeit des Kolbens und folglich der Keillanze 20 in Ausfahrrichtung reduziert wird. Ist das Schmiermittel vollständig aus der Schmiermittelkammer 60 entfernt, so sperrt der Schieber 80 die Tankleitung 34 vollständig (siehe Figur 3d)), so dass die Ausfahrkammer 22 nicht mehr mit Hydraulikmedium beaufschlagt werden kann. Folglich kann die Keillanze 20 nicht mehr in die Ausfahrrichtung bewegt werden und die Verschiebegeschwindigkeit wird auf null verringert. Ein Ausfahren der Keillanze 20 ohne ausreichende Schmierung wird damit verhindert.

Die Schutzeinrichtung 74 ist so in das Leitungssystem 25 eingebunden, dass nur die Verschiebegeschwindigkeit beim Ausfahren reduziert oder vollständig oder nahezu vollständig auf null verringert wird, nicht aber die Verschiebegeschwindigkeit beim Einfahren des Kolbens bzw. der Keillanze 20. Ein Einfahren ist somit auch dann möglich, wenn kein Schmiermittel mehr in der Schmiermittelkammer 60 vorhanden ist. Das Leitungssystem 25 umfasst eine Bypass-Leitung 81, mit welcher die Drossel 76 umgangen werden kann. In der Bypass-Leitung 81 ist ein weiteres Rückschlagventil 84 vorhanden, welches dafür sorgt, dass beim Ausfahren der Keillanze 20 das Hydraulikmedium die Drossel 76 durchströmen muss. Beim Einfahren der Keillanze 20 durchströmt das Hydraulikmedium die Bypass-Leitung 81 und nicht die Drossel 76, wenn der Strömungsquerschnitt in der Drossel 76 reduziert ist.

Das Spaltgerät 10 weist weiterhin ein 6/2-Befüllungsventil 82 auf, welches zwischen einer Betriebsstellung und einer Befüllungsstellung schaltbar ist. Im dargestellten Ausführungsbeispiel wird das 6/2-Befüllungsventil 82 federbetätigt in die Betriebsstellung gestellt. 6/2-Befüllungsventil 82 ist mit der Einfüllleitung 48 und der Abführleitung 54 verbunden. Weiterhin sind die Druckleitung 32 und die Tankleitung 34 an das 6/2-Befüllungsventil 82 angeschlossen. In der dargestellten Betriebsstellung gibt das 6/2-Befüllungsventil 82 die Abführleitung 54 frei, während sie die Einfüllleitung 48 sperrt und die Druckleitung 32 von der Tankleitung 34 trennt. Folglich kann einerseits kein Schmiermittel über die Einfüllleitung 48 in die Schmiermittelkammer 60 eingefüllt werden und andererseits kann kein Schmiermittel über den Einfüllstutzen 50 entweichen. In der Befüllungsstellung, in welche das 6/2-Befüllventil 82 beispielsweise durch Einschrauben eines Befülladapters gestellt werden kann, sperrt das 6/2-Befüllungsventil 82 die Abführleitung 54, während sie die Einfüllleitung 48 freigibt, so dass das Schmiermittel in die Schmiermittelkammer 60 eingebracht wird. Weiterhin verbindet das 6/2-Befüllungsventil 82 in der Befüllungsstellung die Druckleitung 32 und die Tankleitung 34, wodurch diese drucklos geschaltet werden. Hierdurch wird erreicht, dass in der Drucckammer 62 kein Druck anliegt, so dass das Schmiermittel beispielsweise mit einer Fettspritze ohne größeren Kraftaufwand in die Schmiermittelkammer 60 eingefüllt werden kann.

Wie erwähnt, kann der Schmiermittelvorratsbehälter 46 auch als austauschbare Schmiermittelkartusche ausgeführt sein. In diesem Fall ist kein Befüllen des Schmiermittelvorratsbehälters 46 auf die oben beschriebene Weise notwendig. Das Vorsehen des 6/2-Befüllungsventil 82 ist in diesem Fall nicht erforderlich.

Die Dosiereinrichtung 64 kann so eingestellt werden, dass pro Einfahrvorgang ein Volumen von 0 bis 8 cm³ ausgebracht werden können. Eine Menge von 0,7 bis 0,8 cm³ pro Einfahrvorgang hat sich für die meisten Anwendungen als ausreichend erwiesen. Die Schmiermittelkammer 60 kann so ausgestaltet sein, dass sie ein Volumen von 0,7 L für das Schmiermittel bereitstellen kann. Die Schutzeinrichtung 74 kann so ausgestaltet sein, dass die Verschiebegeschwindigkeit dann reduziert wird, wenn noch 15 bis 20% des maximalen Volumens an Schmiermittel in der Schmiermittelkammer 60 vorhanden sind. Der Schieber 80 und die Feder 78, mit welcher der Schieber 80 vorgespannt werden, können so ausgebildet werden, dass von Beginn der Querschnittsreduzierung bis zum kompletten Verschließen der Tankleitung 34 die Keillanze 20 noch 15 bis 20 Mal ein- und ausgefahren werden kann, wenn die Dosiereinrichtung 64 so eingestellt ist, dass sie das maximale Volumen an Schmiermittel ausbringt.

Nicht dargestellt ist eine Ausführungsform, in welcher die Druckleitung 32 und die Tankleitung 34 mit einem Druckübersetzer, auch Booster genannt, verbunden sind, der den Druck des Hydraulikmediums verstärkt. Der Druckübersetzer wird so angesteuert, dass er dann, wenn der Querschnitt der Tankleitung 34 reduziert wird, nicht mehr aktiviert wird. Beim Einfahren des Kolbens bzw. der Keillanze 20 wird der Druckübersetzer jedoch aktiviert.

### Bezugszeichenliste

- 10: Spaltgerät
- 12: Kolben-Zylinder-Einheit
- 14: Kolben
- 16: Kolbenstange
- 18: Zylindergehäuse

- 20: Keillanze
- 22: Ausfahrkammer
- 24: Einfahrkammer
- 25: Leitungssystem
- 26: Druckstück

- 30: Gehäuse
- 32: Druckleitung
- 34: Tankleitung
- 36: Fördervorrichtung
- 38: Hydraulikpumpe

- 40: Tank
- 42: 4/3-Schaltventil
- 44: Schmiereinrichtung
- 46: Schmiermittelvorratsbehälter
- 48: Einfüllleitung

- 50: Einfüllstutzen
- 52: Rückschlagventil
- 54: Abführleitung
- 56: Verteiler
- 58: Förderkolben

- 60: Schmiermittelkammer
- 62: Druckkammer
- 63: Wechselventil
- 64: Dosiereinrichtung
- 65: Verbindungsleitung
- 66: 2/2-Schaltventil
- 68: Schaltkolben

- 70: erste Zuführleitung
- 72: zweite Zuführleitung
- 74: Schutzeinrichtung
- 76: Drossel
- 78: Feder

- 80: Schieber
- 81: Bypass-Leitung
- 82: 6/2-Befüllungsventil
- 84: weiteres Rückschlagventil

## Patentansprüche

1. Hydraulisch betriebenes Spaltgerät (10) mit
- einer Kolben-Zylinder-Einheit (12) mit einer Ausfahrkammer (22) und einer Einfahrkammer (24), in welcher ein Kolben (14) in eine Ausfahrrichtung und eine Einfahrrichtung verschiebbar gelagert ist, wobei die Ausfahrkammer (22) und die Einfahrkammer (24) zum Verschieben des Kolbens (14) mit einer Verschiebegeschwindigkeit mit einem unter Druck stehenden Hydraulikmedium beaufschlagbar sind,
- einem Zylindergehäuse (18), an welchem eine Anzahl von Druckstücken (26) senkrecht zur Ausfahrrichtung und zur Einfahrrichtung verschiebbar gelagert ist,
- einer mit einer Kolbenstange (16) des Kolbens (14) verbundene und mit dem Kolben (14) bewegbare Keillanze (20), die in zur Keillanze (20) komplementär keilförmigen Druckflächen der Druckstücke (26) eingreift und die Druckstücke (26) in Abhängigkeit von der Position des Kolbens (14) in der Kolben (14)-Zylinder-Einheit (12) senkrecht zur Ausfahrrichtung und zur Einfahrrichtung verschiebt,
- einer Schmiereinrichtung (44), mit welcher ein Schmiermittel von einem Schmiermittelvorratsbehälter (46) zwischen die Keillanze (20) und die Druckstücke (26) einbringbar ist **dadurch gekennzeichnet, dass**
- das Spaltgerät (10) eine Schutzeinrichtung (74) aufweist, mit der die Verschiebegeschwindigkeit in Abhängigkeit vom Füllstand des Schmiermittels im Schmiermittelvorratsbehälter (46) reduzierbar ist.

2. Hydraulisch betriebenes Spaltgerät (10) nach Anspruch 1,
**dadurch gekennzeichnet, dass** die Schutzeinrichtung (74) derart ausgebildet ist, dass nur die Verschiebegeschwindigkeit beim Ausfahren des Kolbens (14) reduzierbar ist.

3. Hydraulisch betriebenes Spaltgerät (10) nach einem der Ansprüche 1 oder 2,
**dadurch gekennzeichnet, dass** das Spaltgerät (10) ein Leitungssystem (25) umfasst, in welchem das Hydraulikmedium in die Ausfahrkammer (22) und die Einfahrkammer (24) förderbar ist und die Schutzeinrichtung (74) eine im Leitungssystem (25) angeordnete Drossel (76) umfasst, mit welcher der Volumenstrom des Hydraulikmediums in Abhängigkeit des Füllstands des Schmiermittels im Schmiermittelvorratsbehälter (46) reduzierbar ist.

4. Hydraulisch betriebenes Spaltgerät (10) nach Anspruch 3,
**dadurch gekennzeichnet, dass** die Drossel (76) einen in das Leitungssystem (25) einbringbaren Schieber (80) umfasst, der mit einem im Schmiermittelvorratsbehälter (46) bewegbaren und druck- oder federbelasteten Förderkolben (58) betätigbar ist.

5. Hydraulisch betriebenes Spaltgerät (10) nach Anspruch 4,
**dadurch gekennzeichnet, dass** der Förderkolben (58) den Schmiermittelvorratsbehälter (46) in eine Schmiermittelkammer (60) und eine Druckkammer (62) unterteilt, wobei die Druckkammer (62) mit dem Leitungssystem (25) verbunden ist.

6. Hydraulisch betriebenes Spaltgerät (10) nach einem der Ansprüche 4 oder 5,
**dadurch gekennzeichnet, dass** der Schieber (80) federbelastet ist.

7. Hydraulisch betriebenes Spaltgerät (10) nach einem der vorherigen Ansprüche,
**dadurch gekennzeichnet, dass** die Schmiereinrichtung (44) eine mit dem Schmiermittelvorratsbehälter (46) verbundene Dosiereinrichtung (64) zum Dosieren der Menge des zwischen die Keillanze (20) und die Drückstücke geförderten Schmiermittels aufweist, wobei die Dosiereinrichtung (64) so ausgebildet ist, dass sie nur beim Ausfahren oder nur beim Einfahren des Kolbens (14) das Schmiermittel zwischen die Keillanze (20) und die Drückstücke fördert.

8. Hydraulisch betriebenes Spaltgerät (10) nach einem der vorherigen Ansprüche,
**dadurch gekennzeichnet, dass** die Schmiereinrichtung (44) ein Befüllungsventil (82) umfasst, welches zum Befüllen des Schmiermittelvorratsbehälters in eine Befüllungsstellung stellbar ist, in welcher Schmiermittel in den Schmiermittelvorratsbehälter (46) einbringbar ist.

9. Hydraulisch betriebenes Spaltgerät (10) nach Anspruch 8,
**dadurch gekennzeichnet, dass** das Leitungssystem (25) mit einer Fördervorrichtung (36) zum Fördern des Hydraulikmediums im Leitungssystem (25) verbindbar ist und das Befüllungsventil (82) in der Befüllungsstellung zumindest einen Teil des Leitungssystems (25) von der Fördervorrichtung (36) trennt.

10. Hydraulisch betriebenes Spaltgerät (10) nach einem der Ansprüche 8 oder 9, **dadurch gekennzeichnet, dass** das Befüllungsventil (82) in der Befüllungsstellung den Schmiermittelvorratsbehälter (46) ausgangsseitig schließt.

## Claims

1. Hydraulically operated splitting device (10), comprising
- a piston-cylinder unit (12) with an extension chamber (22) and a retraction chamber (24) in which a piston (14) is mounted displaceably in an extension direction and a retraction direction, wherein the extension chamber (22) and the retraction chamber (24) can be supplied with pressurised hydraulic medium for displacing the piston (14) at a displacement speed,
- a cylinder housing (18) on which a plurality of pressure pieces (26) is mounted displaceably perpendicular to the extension direction and the retraction direction,
- a wedge lance (20) which is connected to a piston rod (16) of the piston (14) and is movable with the piston (14), and which engages in wedge-shaped pressure areas of the pressure pieces (26) which are complementary to the wedge lance (20), and displaces the pressure pieces (26) as a function of the position of the piston (14) in the piston-cylinder unit (14, 12) perpendicular to the extension direction and the retraction direction,
- a lubrication device (44) by which a lubricant from a lubricant reservoir (46) can be introduced between the wedge lance (20) and the pressure pieces (26), **characterised in that**
- the splitting device (10) comprises a protective device (74) by which the displacement speed can be reduced as a function of the filling level of the lubricant in the lubricant reservoir (46).

2. Hydraulically operated splitting device (10) according to claim 1, **characterised in that** the protective device (74) is designed in such a way that only the displacement speed during the extension of the piston (14) can be reduced.

3. Hydraulically operated splitting device (10) according to one of claims 1 or 2, **characterised in that** the splitting device (10) comprises a pipeline system (25) in which the hydraulic medium can be conveyed into the extension chamber (22) and the retraction chamber (24) and the protective device (74) comprises a throttle (76) which is arranged in the pipeline system (25) and by which the volumetric flow rate of the hydraulic medium can be reduced as a function of the filling level of the lubricant in the lubricant reservoir (46).

4. Hydraulically operated splitting device (10) according to claim 3, **characterised in that** the throttle (76) comprises a slide (80) which can be introduced into the pipeline system (25) and can be actuated with a conveyor piston (58) which is movable in the lubricant reservoir (46) and is pressure-loaded or spring-loaded.

5. Hydraulically operated splitting device (10) according to claim 4, **characterised in that** the conveyor piston (58) divides the lubricant reservoir (46) into a lubricant chamber (60) and a pressure chamber (62), wherein the pressure chamber (62) is connected to the pipeline system (25).

6. Hydraulically operated splitting device (10) according to one of claims 4 or 5, **characterised in that** the slide (80) is spring-loaded.

7. Hydraulically operated splitting device (10) according to one of the preceding claims, **characterised in that** the lubrication device (44) comprises a dosing device (64) connected to the lubricant reservoir (46) for dosing the amount of the lubricant conveyed between the wedge lance (20) and the pressure pieces, wherein the dosing device (64) is designed so that it conveys the lubricant between the wedge lance (20) and the pressure pieces only during the extension or only during the retraction of the piston (14).

8. Hydraulically operated splitting device (10) according to one of the preceding claims, **characterised in that** the lubrication device (44) comprises a filling valve (82) which for filling of the lubricant reservoir can be adjusted to a filling setting in which lubricant can be introduced into the lubricant reservoir (46).

9. Hydraulically operated splitting device (10) according to claim 8, **characterised in that** the pipeline system (25) can be connected to a conveyor device (36) for conveying the hydraulic medium in the pipeline system (25), and the filling valve (82) in the filling setting separates at least a part of the pipeline system (25) from the conveyor device (36).

10. Hydraulically operated splitting device (10) according to one of claims 8 or 9, **characterised in that** the filling valve (82) in the filling setting closes the lubricant reservoir (46) at the outlet end.

## Revendications

1. Appareil de fractionnement (10) à commande hydraulique comprenant :
- une unité cylindre piston (12) comprenant une chambre de déploiement (22) et une chambre de rétraction (24) dans lesquelles un piston (14) est logé mobile en translation dans une direction de déploiement et dans une direction de rétraction, la chambre de déploiement (22) et la chambre de rétraction (24) pouvant être alimentées par un fluide sous pression pour permettre de déplacer le piston (14) à une vitesse de déplacement,
- un carter de cylindre (18) sur lequel sont montées plusieurs pièces de pression (26) mobiles en translation perpendiculairement à la direction de déploiement et à la direction de rétraction,
- une lance en coin (20) reliée à la tige (16) du piston (14) et mobile avec ce piston (14), qui vient en prise dans des surfaces de pression des pièces de pression (26) ayant une forme de coin complémentaire de cette lance en coin (20), et qui déplace les pièces de pression (26) en fonction de la position du piston (14) dans l'unité cylindre piston (14, 12) perpendiculairement à la direction de déploiement et à la direction de rétraction,
- un dispositif de lubrification (44) pouvant introduire un fluide de lubrification provenant d'un réservoir de fluide de lubrification (46) entre la lance en coin (20) et les pièces de pression (26),
**caractérisé en ce que**
- l'appareil de fractionnement (10) comporte un dispositif de protection (74) permettant de réduire la vitesse de translation en fonction du niveau du fluide de lubrification dans le réservoir de fluide de lubrification (46).

2. Appareil de fractionnement à commande hydraulique (10) conforme à la revendication 1,
**caractérisé en ce que**
le dispositif de protection (74) est réalisé de sorte que la vitesse de translation ne puisse être réduite que lors du déploiement du piston (14).

3. Appareil de fractionnement à commande hydraulique (10) conforme à l'une des revendications 1 et 2,
**caractérisé en ce que**
l'appareil de fractionnement (10) comporte un système de conduites (25) dans lequel le fluide hydraulique peut être refoulé dans la chambre de déploiement (22) et dans la chambre de rétraction (24), et le dispositif de protection (74) comporte un étranglement (76) situé dans le système de conduites (25) permettant de réduire le débit du fluide hydraulique en fonction du niveau de fluide de lubrification dans le réservoir de fluide de lubrification (46).

4. Appareil de fractionnement à commande hydraulique (10) conforme à la revendication 3,
**caractérisé en ce que**
l'étranglement (76) comporte un coulisseau (80) pouvant être introduit dans le système de conduites (25) qui peut être actionné par un piston de refoulement (58) précontraint pneumatiquement ou élastiquement mobile dans le réservoir de fluide de lubrification (46).

5. Appareil de fractionnement à commande hydraulique (10) conforme à la revendication 4,
**caractérisé en ce que**
le piston de refoulement (58) subdivise le réservoir de fluide de lubrification (46) en une chambre de fluide de lubrification (60) et une chambre de pression (62), la chambre de pression (62) étant relié au système de conduites (25) .

6. Appareil de fractionnement à commande hydraulique (10) conforme à l'une des revendications 4 et 5,
**caractérisé en ce que**
le coulisseau (80) est précontraint élastiquement.

7. Appareil de fractionnement à commande hydraulique (10) conforme à l'une des revendications précédentes,
**caractérisé en ce que**
le dispositif de lubrification (44) comporte un dispositif de dosage (64) relié au réservoir de fluide de lubrification (46) pour permettre de doser la quantité de fluide de lubrification refoulée entre la lance en coin (20) et les pièces de pression, le dispositif de dosage (64) étant réalisé de façon à ne refouler le fluide de lubrification entre la lance en coin (20) et les pièces de pression que lors du déploiement ou que lors de la rétraction du piston (14).

8. Appareil de fractionnement à commande hydraulique (10) conforme à l'une des revendications précédentes,
**caractérisé en ce que**
le dispositif de lubrification (44) comporte une soupape de remplissage (82) qui peut être positionnée pour permettre de remplir le réservoir de fluide de lubrification dans une position de remplissage dans laquelle du fluide de lubrification peut être introduit dans le réservoir de fluide de lubrification (46).

9. Appareil de fractionnement à commande hydraulique (10) conforme à la revendication 8,
**caractérisé en ce que**
le système de conduites (25) peut être relié à un dispositif de refoulement (36) pour permettre de refouler le fluide hydraulique dans le système de conduites (25), et dans la position de remplissage la soupape de remplissage (82) sépare, au moins une partie du systèmes de conduite (25) du dispositif de refoulement (36).

10. Appareil de fractionnement à commande hydraulique (10) conforme à la revendication 8 ou 9,
**caractérisé en ce que**
dans la position de remplissage la soupape de remplissage (82) ferme côté sortie le réservoir de fluide de lubrification (46).
